# EUROPEAN PATENT SPECIFICATION

(11) **EP 2 030 849 B1**
(45) Date of publication and mention of the grant of the patent: **13.07.2011**
(21) Application number: 08008934.5
(22) Date of filing: 14.05.2008
(51) Int. Cl.: B60R 22/34

(54) **Seatbelt retractor and seatbelt unit having the same**
Sicherheitsgurtaufroller und Sicherheitsgurt mit einem solchen Aufroller
Rétracteur de ceinture de sécurité et unité de ceinture de sécurité le comprenant

(30) Priority: 03.09.2007 JP 2007227426
(43) Date of publication of application: 04.03.2009
(73) Proprietor: Takata Corporation, Tokyo 106-8510 (JP)
(72) Inventor: Takao, Masato, Tokyo 106-8510 (JP); Inuzuka, Koji, Tokyo 106-8510 (JP); Tanaka, Koji, Tokyo 106-8510 (JP); Murakami, Daisuke, Tokyo 106-8510 (JP)
(74) Representative: Banzer, Hans-Jörg

(56) References cited:
- EP-A- 1 731 388
- JP-A- 2001 130 376
- JP-A- 2001 130 377
- JP-A- 2001 199 309

## Description

### Technical Field

The present invention relates to a technical field of a seatbelt retractor for performing at least one of retraction and withdrawal of a seatbelt by rotating a spool by an electric motor and to a seatbelt unit having the same, and more specifically, it relates to a technical field of a seatbelt retractor in which the electric motor is controlled by an electronic control unit (ECU) and to a seatbelt unit using the same. The left and right in this specification designate the left and right in the corresponding diagrams, respectively.

### Background Art

Conventional seatbelt units mounted to vehicles such as cars restrain occupants with seatbelts in an emergency such as a car crash to prevent the occupants from jumping out of the seats. Such seatbelt units are provided with a seatbelt retractor for retracting a seatbelt. When not used, the seatbelt of this seatbelt retractor is retracted by a spool; when used, it is drawn out and put on the occupants. In an emergency, as described above, the locking mechanism of the seatbelt retractor is activated to stop the rotation of the spool in the belt withdrawing direction, thereby stopping the withdrawal of the seatbelt. Thus, the seatbelt can restrain the occupant in an emergency.

One example of known seatbelt units is a seatbelt unit with a seatbelt retractor that retracts the belt by rotating a spool by an electric motor (refer to Japanese Unexamined Patent Application Publication No. 2001-130377).

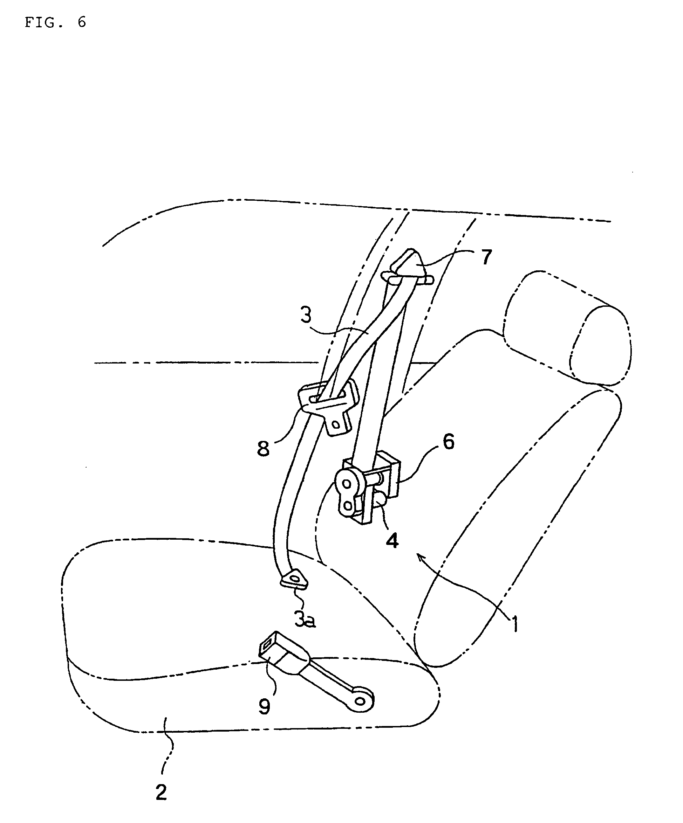

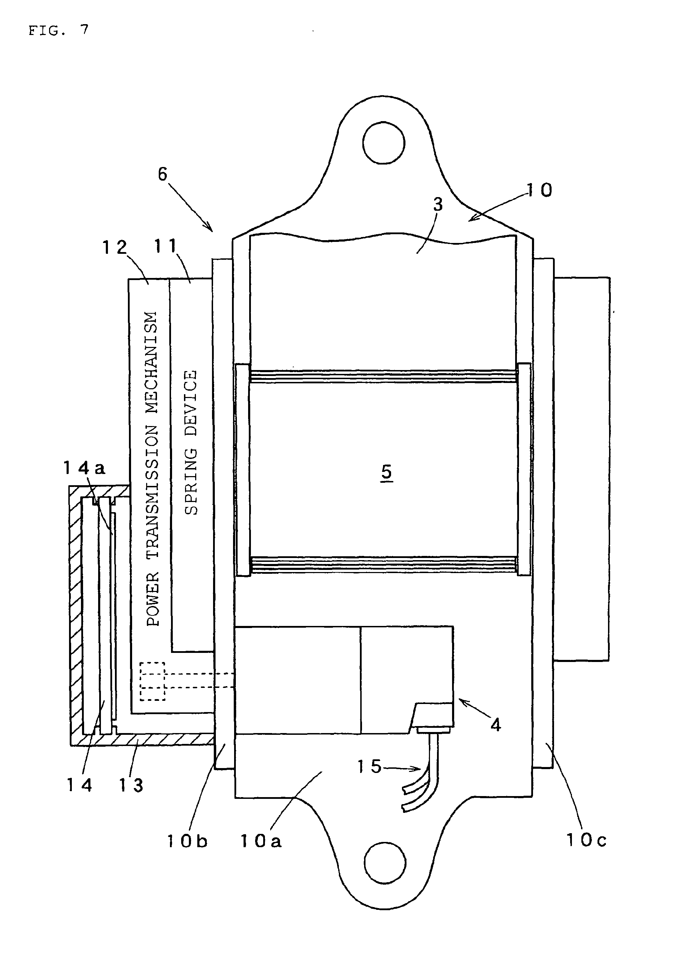

Fig. 6 is a schematic diagram of a conventional seatbelt unit described in the Japanese Unexamined Patent Application Publication No. 2001-130377. Fig. 7 is a schematic diagram of a seatbelt retractor used in this seatbelt unit according to the preamble of claim 1.

As shown in Figs. 6 and 7, this seatbelt unit 1 includes, like known three-point seatbelt units, a seatbelt 3 whose belt anchor 3a at one end is fixed to the floor of the vehicle body or a vehicle seat 2, a seatbelt retractor 6 that retracts the seatbelt 3 by rotating a spool 5 by an electric motor 4, a guide anchor 7 that guides the seatbelt 3 withdrawn from the seatbelt retractor 6 to an occupant's shoulder, a tongue 8 slidably supported by the seatbelt 3 that is guided from the guide anchor 7, and a buckle 9 fixed to the floor of the vehicle body or the vehicle seat 2, with which the tongue 8 is to be detachably insertion-engaged.

Like other known seatbelt retractors, the seatbelt retractor 6 of this example includes a U-shaped frame 10 having a back board 10a and right and left walls 10b and 10c extending from both sides thereof, the seatbelt 3, the spool 5 that is rotatably supported by the frame 10 and retracts the seatbelt 3, a spring device 11 that is supported by the frame 10 and constantly urges the spool 5 in the retracting direction, the motor 4 that is supported by the frame 10 and serves as driving means for rotating the spool 5, a power transmission mechanism 12 that is supported by the frame 10, converts the power of the motor 4, and transmits it to the spool 5, and a circuit board 14 having a printed circuit 14a that is supported by a cover 13 disposed on the left side wall 10b of the frame 10 and controls the driving of the motor 4. Accordingly, the seatbelt 3 is retracted only using the urging force of the spring device 11 or both of the urging force of the spring device 11 and the driving force of the motor 4.

Although not shown in Fig. 7, this seatbelt retractor 6 has, on the right side wall 10c of the frame 10, a known vehicle sensor (deceleration sensing mechanism) that is activated when a deceleration larger than a predetermined deceleration is applied to the vehicle at a crash or the like, a known webbing sensor that is activated when the seatbelt 3 is quickly withdrawn faster than a normal seatbelt withdrawing motion (seatbelt withdrawing motion when the occupant wears the seatbelt), and a known locking mechanism that is activated by the vehicle sensor or the webbing sensor to lock the rotation of the spool 5 in the belt withdrawing direction.

Although not disclosed in the Japanese Unexamined Patent Application Publication No. 2001-130377, a motor connector (not shown) is provided at one end of an electrically conducting harness 15 extending from the motor 4. The motor connector is fixed to the frame 10. The seatbelt retractor 6 further has a circuit-board connector (not shown) at one end of an electrically conducting harness (not shown) extending from the circuit board 14. The circuit-board connector is electrically connected to the motor connector.

### Disclosure of the Invention

### Problems to be Solved by the Invention

For motor-driven seatbelt retractors, their electronic control units (ECUs) must be protected from water droplets. However, the seatbelt retractor described in the Japanese Unexamined Patent Application Publication No. 2001-130377 has no special measure to protect the circuit board 14 from water droplets. General waterproofing is to make the cover 13 dripproof to thereby protect the circuit board 14 from water droplets. However, this special dripproof cover 13 needs sealant such as packing, which increases not only its parts count but also cost.

Moreover, electrical connection between the motor 4 and the circuit board 14 needs the harness 15 extending from the motor 4, the motor connector, the harness extending from the circuit board 14, and the circuit-board connector. This poses the problems of not only increasing parts count but also complicating assembling.

The invention is made in consideration of such circumstances. Accordingly, an object of the invention is to provide a seatbelt retractor whose parts count is reduced as much as possible to facilitate assembling and in which its electronic control unit can be protected from water droplets with a simple structure and a seatbelt unit having the same.

### Means for Solving the Problems

According to the invention, this object is achieved by a seatbelt retractor as defined in claim 1 or a seatbelt unit as defined in claim 4. The dependent claims define preferred and advantageous embodiments of the present invention.

To solve the above-described problems, a seatbelt retractor according to the invention including: at least a frame having a back board and both side walls extending from both side rims of the back board; a spool rotatably supported by the frame, for retracting a seatbelt; a motor for rotating the spool; and an electronic control unit for controlling the driving of the motor is characterized in that the electronic control unit is mounted to the frame; the electronic control unit includes: a base; an electronic-control-unit board fixed to the base, for controlling the driving of the motor; and a cover attached to the base in such a manner as to cover the electronic-control-unit board; and the electronic control unit has an opening, at the lower end, which opens the interior of the electronic control unit to the exterior of the electronic control unit.

According to the invention the base may have a guide wall for guiding liquid that has entered the electronic control unit to the right and left side rims of the base and then dropping the liquid.

According to the invention the electronic-control-unit board may have, at the lower end, an electronic-control-unit connector that is electrically connected to the electronic-control-unit board and can be connected to at least one of a motor connector of the motor and a vehicle connector to be connected to a vehicle-side electronic component including a power supply.

A seatbelt unit according to the invention including: at least a seatbelt retractor for performing at least one of retraction and withdrawal of a seatbelt by rotating a spool by a motor; a tongue slidably supported by the seatbelt that is withdrawn from the seatbelt retractor; and a buckle to be detachably engaged with the tongue, wherein the seatbelt restrains the occupant by the engagement of the tongue and the buckle is characterized in that the seatbelt retractor is the seatbelt retractor mentioned above.

### Advantages

The seatbelt retractor of the invention with this structure has an opening at the lower end of the electronic control unit. Therefore, the interior of the electronic control unit can be opened downward to the exterior of the electronic control unit. Accordingly, even if liquid enters the electronic control unit from one cause or another, the liquid can be dropped through the opening. This prevents puddles of liquid from being collected in the electronic control unit, particularly, at the lower end in the electronic control unit, thereby effectively protecting the electronic-control-unit board and the electronic-control-unit connector from the influence of the liquid in the electronic control unit.

Moreover, the base has the guide wall for guiding liquid. Therefore, if liquid has entered from above, the liquid can be received and guided to the right and left side rims of the base by the guide wall, and thereafter dropped. The liquid thus dropped can then be discharged to the exterior through the opening at the lower end of the electronic control unit. This further prevents puddles of water droplets from being collected at the lower end in the electronic control unit.

Furthermore, since the electronic-control-unit connector is provided at the lower end of the electronic-control-unit board, no water droplet adheres to the electronic-control-unit connector, because no water droplet is collected at the lower end in the electronic control unit, as described above.

Furthermore, the integral structure of the electronic-control-unit board and the electronic-control-unit connector can omit the harness for connecting the electronic-control-unit board with the electronic-control-unit connector as in conventional seatbelt retractors. This can reduce parts count and facilitates assembling.

In the seatbelt unit of the invention with this structure, the electronic-control-unit board and the electronic-control-unit connector can be effectively protected from the influence of liquid in the electronic control unit, as described above. Accordingly, for example, even if an occupant spills some liquid in the vehicle cabin onto the electronic control unit, this structure can prevent the liquid from being collected in the electronic control unit, thereby protect the electronic control unit from the influence of the liquid. This allows the tension of the seatbelt and the retraction of the belt, when not used, to be effectively controlled by the motor for a long time, providing preferable occupant restraint.

### Brief Description of the Drawings

Fig. 1 is a schematic diagram showing a seatbelt retractor according to an embodiment of the invention.
Fig. 2 shows an ECU used in the seatbelt retractor of the embodiment schematically in an exploded view, wherein Fig. 2(a) is a perspective view of the base, Fig. 2(b) is a perspective view of the ECU, and Fig. 2(c) is a perspective view of the cover.
Fig. 3 is a perspective view of the ECU used in the seatbelt retractor of this embodiment.
Fig. 4 is a schematic diagram of a seatbelt retractor according to another embodiment of the invention.
Fig. 5 is a schematic diagram of a seatbelt retractor according to further another embodiment of the invention.
Fig. 6 is a schematic diagram of a conventional seatbelt unit.
Fig. 7 is a schematic diagram of a seatbelt retractor used in the seatbelt unit shown in Fig. 6.

### Best Mode for Carrying Out the Invention

The best mode for carrying out the invention will be described hereinbelow with referred to the drawings.

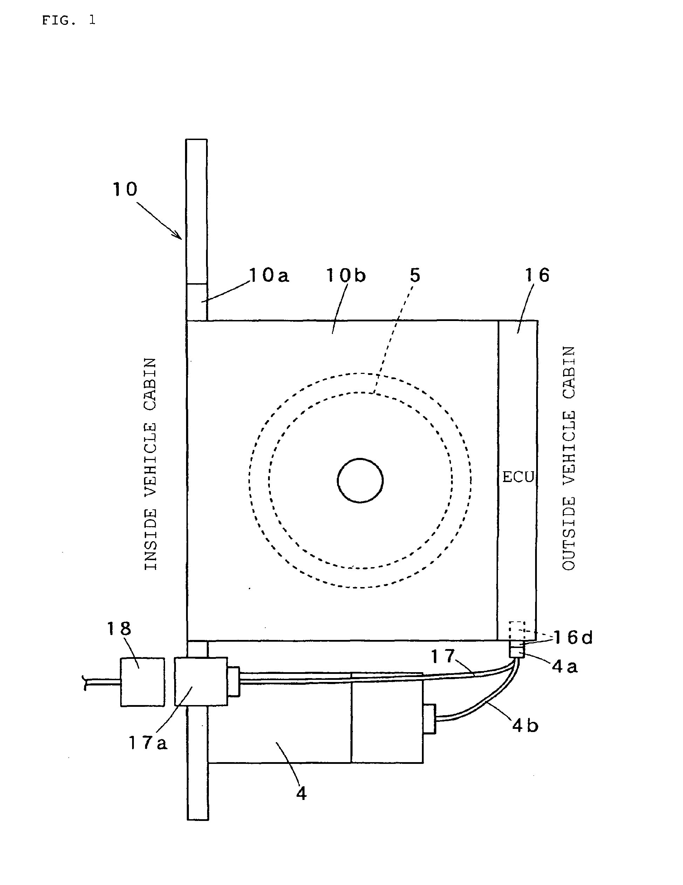

Fig. 1 is a schematic diagram showing a seatbelt retractor according to an embodiment of the invention.

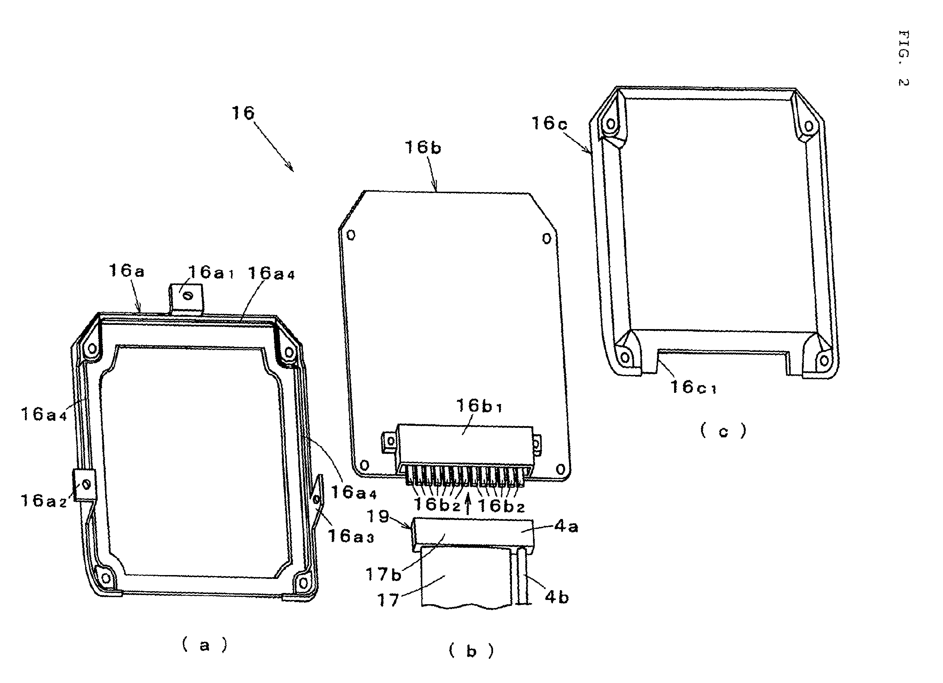

As shown in Fig. 1, a seatbelt retractor 6 of this embodiment includes a plate-like electronic control unit (ECU) 16 for controlling the driving of a motor 4. As shown in Fig. 2, the ECU 16 includes a base 16a, an ECU board 16b fixed to the base 16a and controlling the driving of the motor 4, and a cover 16c attached to the base 16a in such a manner as to cover the ECU board 16b.

The base 16a has mounting sections 16a₁, 16a₂, and 16a₃ for fixing it to a frame 10. The base 16a further has a guide wall 16a₄ for receiving water droplets or liquid, if entering from above, and for guiding them to right and left side rims of the base 16a so that the water droplets drop thereafter.

The ECU board 16b has an ECU connector 16b₁ at the lower end. The ECU connector 16b₁ has a plurality of ECU connector terminals 16b₂.

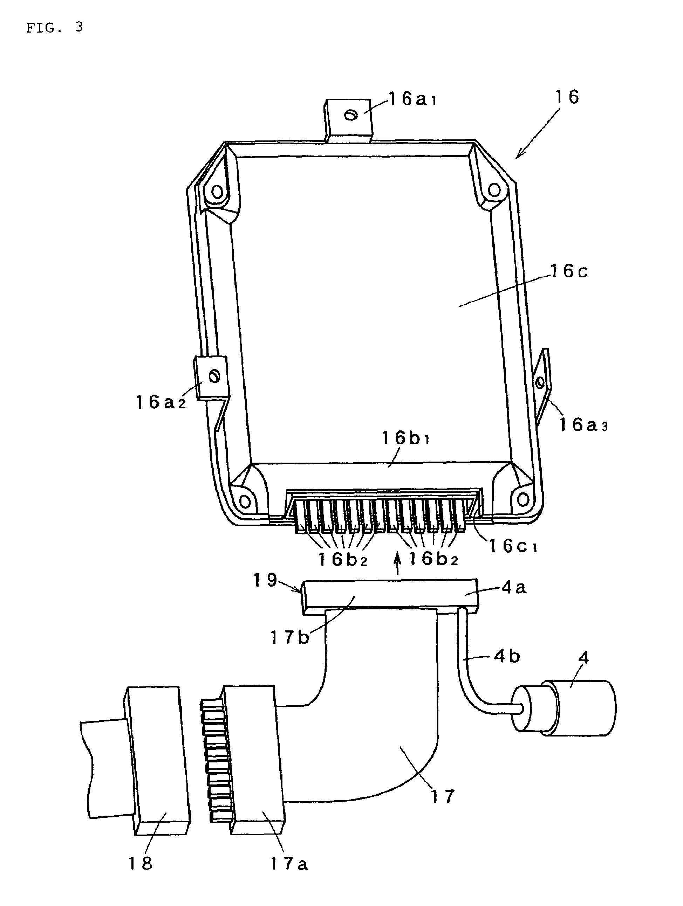

The cover 16c has an opening 16c₁ that is open downward at the lower rim. As shown in Fig. 3, the ECU board 16b having the ECU connector 16b₁ is placed on the base 16a, over which the cover 16c is placed, and then which are fixed together with fasteners such as screws to construct the ECU 16. With the ECU 16 assembled, the interior of the ECU 16 is open downward at the end, through the opening 16c₁ of the cover 16c.

The motor 4 is fixed to the back board 10a of the frame 10. As shown in Figs. 1 and 3, a harness 4b, which has a motor connector 4a at one end, extends from the motor 4. The motor connector 4a is electrically connected to a given number (generally two) of the plurality of ECU connector terminals 16b₂.

Furthermore, as shown in Fig. 1, the back board 10a of the frame 10 supports a vehicle-connector connector 17a at one end of an intermediate harness 17. As shown in Figs. 1 and 3, this vehicle-connector connector 17a is electrically connected to a vehicle connector 18 connected to vehicle-side electrical components except the motor 4, such as the power supply (not shown) of the vehicle. An ECU-connector connector 17b at the other end of the intermediate harness 17 is electrically connected to the remainder of the plurality of ECU connector terminals 16b₂. In this case, the motor connector 4a and the ECU-connector connector 17b are integrally formed of a single member. Thus, the ECU connector terminals 16b₂ of the ECU connector 16b₁ are connected to the vehicle connector 18 using the intermediate harness 17, and connected to the motor 4 using the harness 4b.

Since the seatbelt retractor 6 of this embodiment with this arrangement has the opening 16c₁ at the lower end of the ECU 16, the interior of the ECU 16 can be open downward to the exterior of the ECU 16. Accordingly, even if water droplets enter the ECU 16 from one cause or another, the water droplets can be dropped through the opening. This prevents puddles of water droplets from being collected in the ECU 16, thereby effectively protecting the ECU board 16b and the ECU connector terminals 16b₂ from water droplets that have entered the ECU 16.

Since the base 16a has the guide wall 16a₄, water droplets that have entered from above can be received and guided to the right and left side rims of the base 16a by the guide wall 16a₄, and thereafter dropped. The water droplets thus dropped can be discharged to the exterior through the opening 16c₁ at the lower end of the ECU 16. This further prevents puddles of water droplets from being collected at the lower end in the ECU 16.

Furthermore, since the ECU connector 16b₁ is disposed at the lower end of the ECU board 16b, no water droplet adheres to the ECU connector 16b₁, because no water droplet is collected at the lower end in the ECU 16, as described above.

Furthermore, the integral structure of the ECU board 16b and the ECU connector 16b₁ can omit the conventional harness for connecting the ECU board 16b with the ECU connector 16b₁. This can reduce parts count and facilitates assembling.

Although not shown in Fig. 1, the seatbelt retractor 6 of this embodiment, like the known seatbelt retractor, includes the spring mechanism 11 and the power transmission mechanism 12, shown in Fig. 7, and the locking mechanism, the vehicle sensor, and the webbing sensor. The other operations and advantages of this seatbelt retractor 6 are the same as those of the known seatbelt retractor. The rotation control of the spool 5 by the motor 4 is also the same as that of the known seatbelt retractor with a motor.

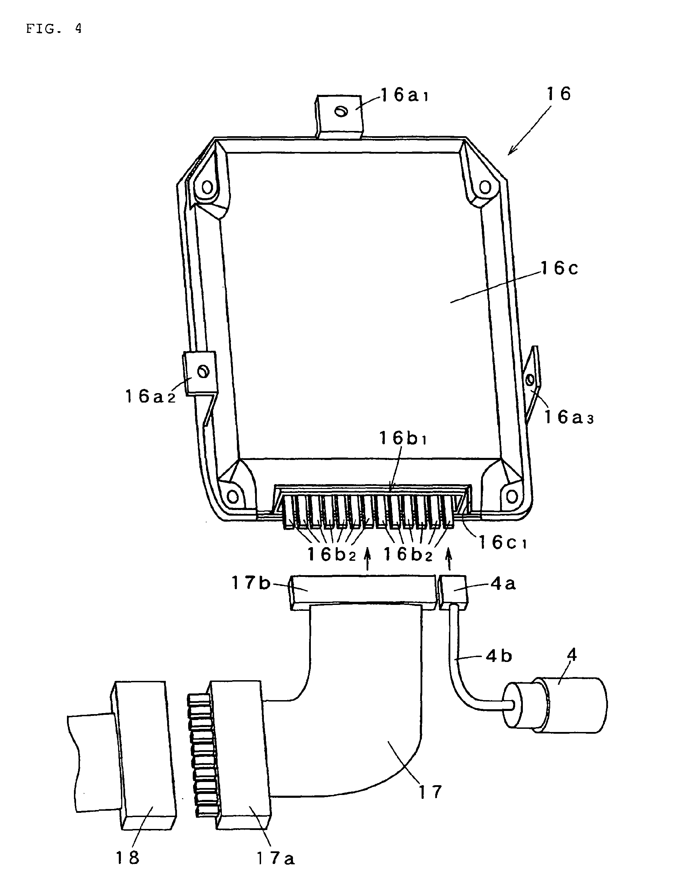

Fig. 4 is a schematic diagram of a seatbelt retractor according to another embodiment of the invention.

In the embodiment shown in Fig. 3, the motor connector 4a and the ECU-connector connector 17b are integrally constructed of the single member 19. However, as shown in Fig. 4, in the case of the seatbelt retractor 6 of this embodiment, the motor connector 4a and the ECU-connector connector 17b are separate.

The other structures, operations, and advantages of the seatbelt retractor 6 of this embodiment are the same as those of the embodiment shown in Fig. 3.

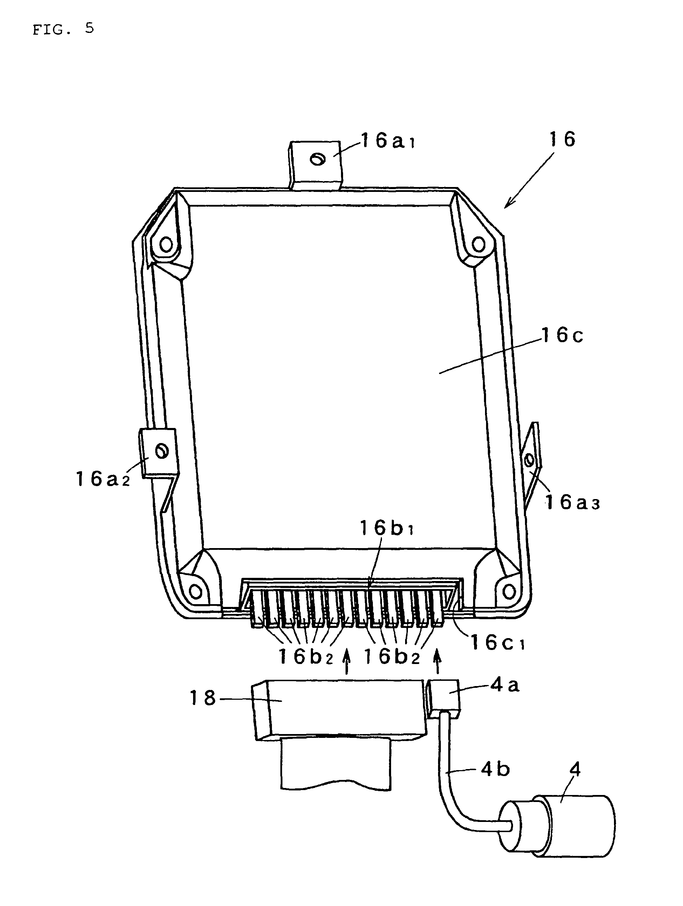

Fig. 5 shows a seatbelt retractor according to further another embodiment of the invention.

Although the embodiment shown in Fig. 4 uses the intermediate harness 17 having the vehicle-connector connector 17a and the ECU-connector connector 17b, the seatbelt retractor 6 of this embodiment has not the intermediate harness 17. Accordingly, in this case, the vehicle connector 18 is directly electrically connected to the ECU connector terminals 16b₂ of the ECU connector 16b₁.

The other structures, operations, and advantages of this seatbelt retractor 6 are the same as those of the embodiment shown in Fig. 4.

In the foregoing embodiments, the ECU connector 16b₁ is connected both of the motor connector 4a and the vehicle connector 18. However, this invention may have a structure in which the ECU connector 16b₁ is connected to only one of the motor connector 4a and the vehicle connector 18.

The seatbelt retractor of the invention may perform only retraction of the seatbelt by the driving force of the motor, as described in Japanese Unexamined Patent Application Publication No. 2001-130377, or alternatively, both of retraction and withdrawal of the seatbelt by the driving force of the motor. As a further alternative, the seatbelt retractor may perform only withdrawal of the seatbelt by the driving force of the motor. In other words, the seatbelt retractor of the invention performs at least one of retraction and withdrawal of the seatbelt.

The seatbelt retractor 6 of this embodiment can be applied to the seatbelt retractor 6 of the conventional three-point seatbelt unit 1, shown in Fig. 6.

In the seatbelt unit 1 equipped with the seatbelt retractor 6 of the invention, the ECU board 16b and the ECU connector 16b₁ can be effectively protected from water droplets in the ECU 16. Accordingly, for example, even if an occupant spills some liquid in the vehicle cabin onto the ECU 16, this structure can prevent the liquid from being collected in the ECU 16, thereby protecting the ECU 16 from the influence of the water droplets. This allows the tension of the seatbelt 3 to be effectively controlled by the motor 4 for a long time, providing preferable occupant restraint.

### Industrial Applicability

The seatbelt retractor and the seatbelt unit of the invention are suitable for seatbelt retractors that perform at least one of belt retraction and withdrawal by controlling the rotation of the spool using a motor, and for seatbelt units having the same.

## Claims

1. A seatbelt retractor comprising:
at least a frame (10) having a back board (10a) and side walls (10b, 10c) extending from both side rims of the back board (10a);
a spool (5) rotatably supported by the frame (10), the spool (5) retracting a seatbelt (3);
a motor (4) for rotating the spool (5); and
an electronic control unit (16) for controlling the driving of the motor (4), wherein the electronic control unit (16) is mounted to the frame (10) and
includes a base (16a), an electronic-control-unit board (16b) fixed to the base (16a), the electronic-control-unit board (16b) controlling the driving of the motor (4), and a cover (16c) attached to the base (16a) in such a manner that it covers the electronic-control-unit board (16b), **characterized in that**
the electronic control unit (16) has an opening (16c₁) at its lower end, which opens the interior of the electronic control unit (16) to the exterior of the electronic control unit (16).

2. The seatbelt retractor according to Claim 1, wherein the base (16a) has a guide wall (16a₄) for guiding liquid that has entered the electronic control unit (16) to the right and left side rims of the base (16a) and then dropping the liquid.

3. The seatbelt retractor according to Claim 1 or 2, wherein the electronic-control-unit board (16b) has, at the lower end, an electronic-control-unit connector (16b₁) that is electrically connected to the electronic-control-unit board (16b) and can be connected to at least one of a motor connector (4a) of the motor (4) and a vehicle connector (18) to be connected to a vehicle-side electronic component including a power supply.

4. A seatbelt unit comprising
at least a seatbelt retractor (6) for performing at least one of retraction and withdrawal of a seatbelt (3) by rotating a spool (5) by a motor (4);
a tongue (8) slidably supported by the seatbelt (3) that is withdrawn from the seatbelt retractor (6); and
a buckle (9) to be detachably engaged with the tongue (8), wherein the seatbelt (3) restrains the occupant by the engagement of the tongue (8) and the buckle (9);
wherein the seatbelt retractor is the seatbelt retractor (6) according to one of Claims 1 to 3.

## Patentansprüche

1. Sitzgurt-Aufrollvorrichtung umfassend:
mindestens einen Rahmen (10), welcher eine Rückwand (10a) und Seitenwände (10b, 10c), welche sich von beiden Seitenrändern der Rückwand (10a) erstrecken, aufweist;
eine Spule (5), welche drehbar von dem Rahmen (10) gehalten wird, wobei die Spule (5) einen Sitzgurt (3) aufrollt;
einen Motor (4), um die Spule (5) zu drehen; und
eine elektronische Steuereinheit (16), um den Antrieb des Motors (4) zu steuern,
wobei die elektronische Steuereinheit (16) an dem Rahmen (10) angebracht ist
und
aufweist eine Basis (16a), eine Karte (16b) der elektronischen Steuereinheit, welche an der Basis (16a) befestigt ist, wobei die Karte (16b) der elektronischen Steuereinheit den Antrieb des Motors (4) steuert, und eine Abdeckung (16c), welche in solch einer Weise an der Basis (16a) angebracht ist, dass sie die Karte (16b) der elektronischen Steuereinheit abdeckt,
**dadurch gekennzeichnet,**
**dass** die elektronische Steuereinheit (16) an ihrem unteren Ende eine Öffnung (16c₁) aufweist, welche das Innere der elektronischen Steuereinheit (16) zu dem Äußeren der elektronischen Steuereinheit (16) öffnet.

2. Sitzgurt-Aufrollvorrichtung nach Anspruch 1, **dadurch gekennzeichnet, dass** die Basis (16a) eine Wand (16a₄) aufweist, um eine Flüssigkeit zu führen, welche an dem rechten und linken Seitenrand der Basis (16a) in die elektronische Steuereinheit (16) eingedrungen ist, und die Flüssigkeit dann abtropfen zu lassen.

3. Sitzgurt-Aufrollvorrichtung nach Anspruch 1 oder 2, **dadurch gekennzeichnet, dass** die Karte (16b) der elektronischen Steuereinheit an dem unteren Ende ein Verbindungselement (16b₁) der elektronischen Steuereinheit aufweist, welches elektrisch mit der Karte (16b) der elektronischen Steuereinheit verbunden und mit einem Motor-Verbindungselement (4a) des Motors (4) und/oder einem Fahrzeug-Verbindungselement (18) verbindbar ist, um mit einer fahrzeugseitigen elektronischen Komponente, die eine Spannungszufuhr einschließt, verbunden zu werden.

4. Sitzgurt-Einheit umfassend
mindestens eine Sitzgurt-Aufrollvorrichtung (6) zur Durchführung eines Aufrollens und/oder eines Abwickelns eines Sitzgurtes (3) durch Drehen einer Spule (5) durch einen Motor (4);
eine Zunge (8), welche gleitend durch den Sitzgurt (3), welcher von der Sitzgurt-Aufrollvorrichtung (6) abgewickelt wird, gehalten wird; und
ein Gurtschloss (9), welches sich lösbar mit der Zunge (8) in Eingriff befindet, wobei der Sitzgurt (3) den Insassen durch den Eingriff der Zunge (8) mit dem Gurtschloss (9) zurückhält;
wobei die Sitzgurt-Aufrollvorrichtung die Sitzgurt-Aufrollvorrichtung (6) nach einem der Ansprüche 1 bis 3 ist.

## Revendications

1. Un enrouleur de ceinture de sécurité comprenant :
- au moins un cadre (10) comportant un panneau arrière (10a) et deux parois latérales (10b, 10c) s'étendant à partir de deux bords latéraux du panneau arrière (10a);
- une bobine (5) supportée en rotation par le cadre (10), la bobine (5) enroulant une ceinture de sécurité (3);
- un moteur (4) pour faire tourner la bobine (5), et
- une unité de commande électronique (16) pour commander l'entraînement du moteur (4),
dans lequel l'unité de commande électronique (16) est montée sur le châssis (10) et comprend un socle (16a); une carte électronique d'unité de commande (16b) fixée au socle (16a), la carte d'unité de commande électronique (16b) commandant l'entraînement du moteur (4), et un couvercle (16c) fixé au socle (16a) de manière à couvrir la carte d'unité de commande électronique (16b),
et **caractérisé en ce que** l'unité de commande électronique (16) présente une ouverture (16c₁) à l'extrémité inférieure, qui communique l'intérieur de l'unité de commande électronique (16) à l'extérieur de l'unité de commande électronique (16).

2. L'enrouleur de ceinture de sécurité selon la revendication 1, dans lequel le socle (16a) présente une paroi de guidage (16a₄) pour le guidage du liquide qui aurait pénétré dans l'unité de commande électronique (16) du côté des bords latéraux droit et gauche du socle (16a) et laisser ensuite le liquide s'écouler.

3. L'enrouleur de ceinture de sécurité selon la revendication 1 ou 2, dans lequel la carte de l'unité de commande électronique (16b) présente, à son extrémité inférieure, un connecteur de l'unité de commande électronique (16B₁) qui est électriquement connecté à la carte d'unité de commande électronique (16b ) et peut être relié à au moins un connecteur de moteur (4a) du moteur (4) et un connecteur de véhicule (18) destiné à être connecté à un composant électronique situé sur le côté du véhicule, et incluant une alimentation.

4. Un ensemble formant ceinture de sécurité comprenant
- au moins un enrouleur de ceinture de sécurité (6) pour effectuer au moins une opération de rétractation et de retrait d'une ceinture de sécurité (3) par rotation d'une bobine (5) au moyen d'un moteur (4);
- une languette (8) supportée de façon coulissante par la ceinture de sécurité (3) qui est retirée de l'enrouleur de ceinture de sécurité (6), et
- une boucle (9) destinée à venir en prise de manière amovible avec la languette (8), dans lequel la ceinture de sécurité (3) retient l'occupant par l'engagement de la languette (8 ) et de la boucle (9);
dans lequel l'enrouleur de ceinture de sécurité est l'enrouleur de ceinture de sécurité (6) selon l'une des revendications 1 à 3
